# EUROPEAN PATENT APPLICATION

(11) **EP 3 549 987 A1**
(43) Date of publication of application: **09.10.2019**
(21) Application number: 18165859.2
(22) Date of filing: 05.04.2018
(51) Int. Cl.: C09D 5/18, C09D 171/00

(54) **AIRLESS-SPRAYABLE FIRESTOP COATING COMPOSITION**

(71) Applicant: HILTI Aktiengesellschaft, 9494 Schaan (LI)
(72) Inventor: Gebauer, Klaus, 86853 Langerringen-Gennach (DE); Mücke, Angela, 85570 Markt Schwaben (DE)
(74) Representative: Hilti Aktiengesellschaft Corporate Intellectual Property

(57) **Abstract**

The present invention describes a composition, in particular an airless-sprayable firestop coating, comprising a first low viscosity polyether-based silane-terminated polymer, a second low viscosity polyether-based silane-terminated polymer, a plasticizer, and a polar aprotic solvent. Further, the present invention describes to the use of the coating composition for firestopping in a gap or joint between at least two building structures, preferably structures of a top of wall, wall to wall, floor to wall, floor to floor and edge of slab constructions, such as curtain wall constructions.

## Description

The present invention pertains to a composition, in particular an airless-sprayable firestop coating, comprising a first low viscosity polyether-based silane-terminated polymer, a second low viscosity polyether-based silane-terminated polymer, a plasticizer, and a polar aprotic solvent. Further, the present invention pertains to the use of the coating composition for firestopping in a gap or joint between at least two building structures, preferably structures of a top of wall, wall to wall, floor to wall, floor to floor and edge of slab constructions, such as curtain wall constructions.

In general, there are many techniques and processes known to apply coatings, such as paints or lacquers, to a substrate, for example, by vapor deposition (physical or chemical), by certain chemical and electrochemical techniques, by spin or dip coating processes, by roll-to-roll coating processes or by spraying. In particular spraying processes, such as spray painting, thermal spraying, powder spraying and airless spraying, are employed in the field of building construction industries. However, when a larger quantity of coating has to be applied to a substrate, the airless spraying techniques is used the most.

Airless spray atomizes, or breaks up fluid into small droplets without the use of compressed air. In an airless system, fluid is pumped under high pressure through a spray tip. The fast moving high-pressure liquid stream provides the energy necessary to overcome the fluid's viscosity (resistance to flow) and surface tension (a force that bonds the surface of a liquid together) to form a fine spray. In the depiction of spray from a gun, high pressure forces fluid through a small nozzle (spray tip). The fluid emerges as a solid stream (sheet) at a high speed. When the solid stream hits the air, it becomes disrupted. This disruption breaks the fluid into fragments initially, then ultimately very small droplets that form the spray pattern. The tip size and pressure is what determines the material flow rate.

Airless sprayers provide an easy and economical way to apply coatings, especially professional contractors prefer to use airless sprayers for several reasons, the most popular being: speed - airless spraying is faster, thus, more jobs can be completed in less time, using less labor; airless spraying is up to 10 times faster than brushing or rolling; quality - airless sprayers produce an even coat of paint on all types of surfaces, leaving a consistent and high quality finish; and versatility - airless sprayers can be used for a wide range of coating materials, including interior and exterior jobs, and can easily be transported from job site to job site.

Further, when it comes to firestopping in a gap or joint between at least two building structures, preferably structures of a top of wall, wall to wall, floor to wall, floor to floor and edge of slab constructions, such as curtain wall constructions, the airless spraying technique is of great advantage as it is characterized by its high efficiency, throughput, and resulting homogeneity of the coating layers on the substrate surface. However, the homogeneity of the coating layers is determined by the force applied, i.e. by the pressure applied. By adjusting the pressure, the processability of the coating is influenced, a higher pressure generally produces a homogeneous and broader spray image.

In the field of fire protection, however, the pressure applied may not be too high, since the substrate to be firestopped is generally made of mineral wool having a low density, made up of individual fibers. If a gap or joint is filled with mineral wool, the pressure applied during the airless spraying process must not exceed 100 bar, as otherwise the coating penetrates deep into the mineral wool thereby causing damages such as large loss of material, braking the mineral wool fibers or blowing away the mineral wool, which will result in an insufficient firestop at the site.

Another frequent problem of coatings in the field of constructions, is their insufficient weathering resistance that also for indoor application becomes relevant during the construction phase when water ingression can happen easily. In case of rain, before stable skin formation of the coating by full curing, the applied coating is easily washed out. Current market products exhibit long curing times in order to provide sufficient resistance to rain. Because of such long curing times the firestop coating needs to be applied a second or even a third time, thereby resulting in a labor-intensive handling of the coating process.

In view of the above, it is an object of the present invention to provide a composition, in particular, a sprayable firestop coating, that can be applied using the airless-spraying technique. In particular, it is an object of the present invention to provide a composition which can be used as a coating having a good processability at pressures lower than 100 bar, such as 80 bar, when airless-sprayed.

In view of the above, it is further an object of the present invention to provide an airless-sprayable firestop coating for enhancing firestopping in a gap or joint between at least two building structures, preferably structures of a top of wall, wall to wall, floor to wall, floor to floor and edge of slab constructions, such as curtain wall constructions.

A further object of the present invention is to provide a composition, which is not water-based, exhibits a rapid curing, is to apply due to suitably tuned viscosity, remains elastic after complete curing, has adhesive characteristics and a low Young's modulus and requires only a low layer thickness, and hence can be used as an airless-sprayable coating.

These and other objectives as they will become apparent from the ensuring description of the invention are solved by the present invention as described in the independent claims. The dependent claims pertain to preferred embodiments.

According to the present invention, the composition comprises a first low viscosity polyether-based silane-terminated polymer, a second low viscosity polyether-based silane-terminated polymer, a plasticizer and a polar aprotic solvent. In particular, the first low viscosity polyether-based silane-terminated polymer and/or the second low viscosity polyether-based silane-terminated polymer is a trimethoxysilylpropylcarbamate-terminated polyether or a dimethoxy(methyl)silylmethylcarbamate-terminated polyether.

Within the meaning of the present invention, the term "first low viscosity polyether-based silane-terminated polymer" refers to a trimethoxysilylpropylcarbamate-terminated polyether or a dimethoxy(methyl)silylmethylcarbamate-terminated polyether, having a dynamic viscosity in the range of from about 5,000 to about 15,000 mPa s as measured at 25°C according to DIN 51562.

Within the meaning of the present invention, the term "second low viscosity polyether-based silane-terminated polymer" refers to a trimethoxysilylpropylcarbamate-terminated polyether or a dimethoxy(methyl)silylmethylcarbamate-terminated polyether, having a dynamic viscosity in the range of from about 20,000 to about 40,000 mPa s as measured at 25°C according to DIN 51562.

Commercially available examples for the first low viscosity polyether-based silane-terminated polymer are, but not limited to, Geniosil® STP-E 10 and Geniosil® STP-E 15 (Wacker Chemie AG). Commercially available examples for the second low viscosity polyether-based silane-terminated polymer, but not limited to, Geniosil® STP-E 30 and Geniosil® STP-E 35 (Wacker Chemie AG). In a preferred embodiment of the composition the present invention, the first and the second low viscosity polyether-based silane-terminated polymer is a dimethoxy(methyl)silylmethylcarbamate-terminated polyether.

The first and the second low viscosity polyether-based silane-terminated polymer are present in the composition in an amount ranging from about 1 wt.-% to about 12 wt.-%, preferably from about 2 wt.-% to about 7 wt.-%, more preferably from about 2 wt.-% to about 6 wt.-%, based on the total weight of the composition. In a preferred embodiment the amount of the first low viscosity polyether-based silane-terminated polymer is 5.5 wt.-% and the amount of the second first low viscosity polyether-based silane-terminated polymer is 2.5 wt.-%, based on the total weight of the composition.

The composition of the present invention comprises a plasticizer. The plasticizer has the function of softening, extending the final cured polymer network, and providing extra liquid components so that the fillers employed in the composition are fully wetted. The plasticizer can be present in any amount sufficient to fulfil this function.

Typical plasticizers that can be used are, but not limited to, derivatives of benzoic acid, such as diethylene glycol dibenzoate, dipropylene glycol dibenzoate, 2,2,4-trimethyl-1,3-pentaneodiol-isobutyrate benzoate; derivatives of phthalic acid, such as dibutyl, dioctyl, dicyclohexyl, diisoocyl, diisodecyl, diisononyl, dibenzyl or butylbenzyl phthalate; derivatives of isophthalic acid such as di-2-ethylhexyl isophthalate; derivatives of trimellitic acid such as tris-2-ethylhexyl trimellitate, tri(heptyl, nonyl) trimellitate, triisononyl trimellitate; derivatives of adipic acid such as diisononyl adipate, diisodecyl adipate, dioctyl adipate, dibutyl adipate, di-*n*-hexyl adipate, heptyl nonyl adipate, di-2-ethylhexyl adipate; derivatives of phosphoric acid such as isodecyldiphenyl phosphate, 2-ethyhexyl diphenyl phosphate, tri-2-ethylhexyl phosphate, triphenyl phosphate, tricresyl phosphate; derivatives of sebacic acid such as di-2-ethylhexyl sebacate; derivatives of azelaic acid such as di-2-ethylhexyl azelate; derivatives of oleic acid such as butyl oleate; derivatives of stearic acid such as n-butyl stearate; and derivatives of citric acid such as tri-*n*-butyl citrate, tri-*n*-butyl acetyl citrate; or mixtures thereof. Preferred plasticizers are alkyl esters of phthalates, adipates, and phosphates; more preferably are diisononyl adipate, diisononyl phthalate or isodecyldiphenyl phosphate, or mixtures thereof.

Commercially available plasticizers are for example Plastomoll® DNA (BASF SE), EASTMAN® DOTP Plasticizer (Eastman Chemical Company), Esterex® NP 343 (Excon Mobil Corporation), Solusolv® 2075 (Solutia Inc.), Hexamoll® DINCH (BASF SE), Mesamoll® II (Lanxess Germany GmbH), triethyl citrate (Sigma Aldrich), Paraplex® G-60 (Hall Star Company), Disflammol® TOF (Lanxess Germany GmbH) and Uniplex® LXS TP ODS (Lanxess Germany GmbH).

The plasticizer is present in the composition in an amount ranging from about 20 wt.-% to about 70 wt.-%, preferably from about 30 wt.-% to about 65 wt.-%, more preferably from about 45 wt.-% to about 60 wt.-%, based on the total weight of the composition. In a preferred embodiment the amount of plasticizer is 57 wt.-%, based on the total weight of the composition.

The composition according to the present invention further comprises a polar aprotic solvent. In particular, the polar aprotic solvent is selected from the group consisting of dimethyl sulfoxide, ethyl acetate, dimethyl formamide, acetonitrile, acetone, methyl ethyl ketone, 1,4-dioxane and tetrahydrofuran. The polar aprotic solvent in the composition of the present invention is preferably ethyl acetate.

The polar aprotic solvent is present in the composition in an amount ranging from about 1 wt.-% to about 50 wt.-%, preferably from about 5 wt.-% to about 40 wt.-%, more preferably from about 10 wt.-% to about 30 wt.-%, based on the total weight of the composition. In a preferred embodiment the amount of the polar aprotic solvent is 10 wt.-%, based on the total weight of the composition.

The composition according to the present invention may further comprise a thixotropic additive. The thixotropic additive has the function of improving or adjusting the rheological properties of the coating and is present at an amount ranging from about 0.5 wt.-% to about 10 wt.-%, preferably from about 1 wt.-% to about 8 wt.-%, more preferably from about 3 wt.-% to about 7 wt.-%, based on the total weight of the composition. In a preferred embodiment the amount of thixotropic additive is 6 wt.-%, based on the total weight of the composition.

In a preferred embodiment of the present invention, the thixotropic additive is fumed silica, for example Cab-O-Sil® TS 720 (Cabot Corp.). However, other thixotropic additives may be used, such as organic derivatives of castor oil, for example THIXCIN® R (Elementis Specialties Inc.) or amide waxes, for example LUVOTIX® AB (Lehmann&Voss&Co. KG).

The composition according to the present invention may further comprise a catalyst.

As catalysts, all compounds can be used which are suitable to catalyze the formation of Si-O-Si bonds between the silane groups of the polymers. Examples are metal catalysts such as tin, titanium, aluminum, bismuth, and zirconium compounds, basic catalysts, acidic catalysts, and amines.

Among the tin compounds are preferred dibutyltin dilaurate, dibutyltin maleate, dibutyltin diacetate, dibutyltin oxide, or corresponding compounds of dioctyltin such as dioctyltin naphthenate, dimethyltin dineododecanoate, reaction products from dibutyltin oxide and phthalic acid esters.

Among the titanium compounds, titanate esters are preferred such as tetrabutyl titanate, tetrapropyl titanate, tetraisopropyl titanate, and tetraacetylacetonate titanate.

Among the metal based catalysts may further be mentioned organoaluminum compounds or reaction products from bismuth salts and chelate compounds such as zirconium tetraacetylacetonate.

As acidic catalysts, phosphoric acid or phosphoric acid esters, toluene sulfonic acid, and mineral acids can be exemplified.

Examples for basic catalysts are NaOH, KOH, K₂CO₃, ammonia, Na₂CO₃, aliphatic alcoholates, or phenolates.

Examples for amines are triethylamine, tributylamine, trioctylamine, monoethanolamine, diethanolamine, triethanolamine, triisopropanolamine, Quadrol, diethylenetriamine, dimethylaniline, proton sponge, *N*,*N*-diisopropylethylamine, *N*,*N*-dimethylethylenediamine, *N*,*N*'-dimethylethylenediamine, *N*,*N*-dimethylcyclohexylamine, *N,N-*dimethylaniline, benzamidine, *N*-ethylmorpholine, 1,3-diphenylguanidine, 4-(dimethylamino)-pyridine (DMAP), *N*,*N*,*N*',*N*",*N*"-pentamethyldiethylenetriamine (PMDETA), imidazole and 1-methylimidazole, and salts of amines and carboxylic acids. Preferred amines are 1,8-diazabicyclo[5.4.0]undec-7-ene (DBU), 1,5-diazabicyclo[4.3.0]non-5-ene (DBN), 1,4-diazabicyclo[2.2.2]octane (DABCO), 1,1,3,3-tetramethylguanidine (TMG), 2,4,6-tris(dimethylaminomethyl)phenol (TDMAMP), polyether amines such as the Jeffamines and the Jeffkats from Huntsman, and aminosilanes. In this regard, reference is made to the patent applications WO 2013/003053 A1 and WO 2011/157562 A1.

In a preferred embodiment of the composition, the catalyst is 3-aminopropyltrimethoxysilane (AMEO). This catalyst is commercially available for example under the trade name GENIOSIL® GF 96 (Wacker Chemie AG).

The type and amount of the catalyst employed in the composition is selected dependent on the low viscosity polyether-based silane-terminated polymer and the desired reactivity. The catalyst is present in the composition in an amount ranging from about 0.1 wt.-% to about 5 wt.-%, preferably from about 1 wt.-% to about 3 wt.-%, more preferably from about 1.5 wt.-% to about 2.5 wt.-%, based on the total weight of the composition. In a preferred embodiment the amount of catalyst is 2 wt.-%, based on the total weight of the composition.

In order to avoid a premature reaction of the low viscosity polyether-based silane-terminated polymer with residual moisture which may be present, a water scavenger may be added to the composition. Preferably, the water scavenger is an organofunctional alkoxysilane, an oligomeric organofunctional alkoxysilane or an arylalkoxysilane, more preferably a vinyl-functional alkoxysilane. In a preferred embodiment of the composition, the water scavenger is vinyl trimethoxysilane (VTMO), vinyl triethoxysilane (VTEO), and vinyltris(2-methoxyethoxy)silane (VTMOEO).

Commercially available water scavengers are, but not limited to, Dynasylan® 1146, Dynasylan® 6490, Dynasylan® 6498, Dynasylan® BDAC, Dynasylan® 1122, Dynasylan® 1124, Dynasylan® 1133, Dynasylan® 1204, Dynasylan® 1505, Dynasylan® 1506, Dynasylan® AMEO, Dynasylan® AMEO-T, Dynasylan® VTEO, Dynasylan® VTMO, Dynasylan® VTMOEO, Dynasylan® 6598 (Evonik Industries AG), Geniosil® XL 926, Geniosil® XL 10, Geniosil® XL 12, Geniosil® GF 56, Geniosil® GF 62, Geniosil® GF 31, Geniosil® XL 32, Geniosil® XL 33, Geniosil® GF 39, Geniosil® GF 60, Geniosil® XL 63 und Geniosil® XL 65, and Geniosil® XL-70 (Wacker Chemie AG).

In a preferred embodiment of the composition, the water scavenger is trimethoxyvinylsilane. This water scavenger is commercially available for example under the trade name GENIOSIL® XL 10 (Wacker Chemie AG).

The type and amount of water scavenger employed in the composition is selected dependent on the water-content of the components / composition. The water scavenger is present in the composition in an amount ranging from about 0.1 wt.-% to about 5 wt.-%, preferably from about 1 wt.-% to about 3 wt.-%, more preferably from about 1.5 wt.-% to about 2.5 wt.-%, based on the total weight of the composition. In a preferred embodiment the amount of water scavenger is 2 wt.-%, based on the total weight of the composition.

In order to adjust the mechanical properties of the cured film, a filler may be added to the composition. Additionally, because of no pigments are used, the filler incorporates a certain opacity to the cured film. Preferably, the filler is chalk, for example Omyacarb® 5-SV (Omya International AG). However, other types of fillers may be used, such as quartz powders, for example MILLISIL W12 (Quarzwerke GmbH) or barium sulfate, for example Blanc Fixe® N (Venator Materials PLC) or especially for obtaining opacity talc, for example Finntalc M50 (Mondo Minterals B.V.).

The filler is present in the composition in an amount ranging from about 5 wt.-% to about 40 wt.-%, preferably from about 10 wt.-% to about 30 wt.-%, more preferably from about 15 wt.-% to about 20 wt.-%, based on the total weight of the composition. In a preferred embodiment the amount of filler is 15 wt.-%, based on the total weight of the composition.

The composition of the invention may further comprise additives for improving fire stopping/protection, such as for example ammonium polyphosphate and zinc borate. If fire protection properties, such as intumescence, for example, are desired, the material can contain corresponding additives. Under the effect of heat, as in the event of a fire, the material inflates and forms an insulating layer composed of material having low flammability. The formation of a voluminous insulating layer, namely an ash layer, can occur as the result of the chemical reaction of a mixture composed of corresponding compounds coordinated with one another, which react with one another under the effect of heat. Such systems are known to a person skilled in the art under the term chemical intumescence, and can be used according to the invention. Alternatively, the voluminous insulating layer can be formed by means of inflation of a single compound, which releases gases without a chemical reaction between two compounds having taken place, under the effect of heat. Such systems are known to a person skilled in the art under the term physical intumescence and can also be used according to the invention. The two systems can be used alone or together, in each instance, as a combination, according to the invention.

The composition of the invention is characterized, when compared with the solvent- and water-based systems of the prior art, by a fast curing time avoiding unnecessary physical drying out. This is particularly important when the coated objects must be processed quickly, either by coating with a topcoat or by moving or transporting. The coating is thus significantly less susceptible to external influences on the construction site, such as exposure to rain, water, dust or dirt, which may result in a leaching of water-soluble components or to an increase of abrasiveness. Due to the low viscosity of the composition, despite having a relatively high solid content, the composition remains easy to work with, especially by means of airless-spraying application techniques.

Further, the composition of the invention is particularly suitable as an airless-sprayable firestop coating for metallic and non-metallic objects. The airless-sprayable firestop coating of the invention is used mainly in the construction industries, in particular for improving firestop in a gap or joint between at least two building structures, such as structures of a top of wall, wall to wall, floor to wall, floor to floor and edge of slab constructions, such as curtain wall constructions. Moreover, the airless-sprayable firestop coating according to the invention is used for enhancing firestopping in a gap or joint between at least two building structures, preferably structures of a top of wall, wall to wall, floor to wall, floor to floor and edge of slab constructions, such as curtain wall constructions. The dry thickness of this coating varies preferably from about 250 µm to about 3 mm, more preferably from about 500 µm to about 2 mm, depending on the application.

Preferably, the composition of the invention is applied by using an airless-spraying apparatus, such as for example handheld airless sprayers or electric-powered airless sprayers.

One advantage of the composition of the invention is its applicability with the airless spray guns resulting in a uniform and homogenous coating and at the same time avoiding multiple coatings. The coating composition cures by moisture upon exposure to atmosphere.

The main characteristic that determines the sprayability of such coating compositions and how much wet film may be applied is their viscosity. The composition of the present invention preferably exhibits a dynamic viscosity of below 400 mPa s at a shear velocity of 100 000 s⁻¹, measured with capillary rheometer, die 0.5 mm diameter, 8 mm length, 23°C. More preferably, the dynamic viscosity of the composition is below 200 mPa s at a shear velocity of 100 000 s⁻¹, measured with capillary rheometer, die 0.5 mm diameter, 8 mm length, 23°C.

The present invention also relates to objects which are obtained when the composition according to the invention is cured.

### EXAMPLES

### Inventive Example:

A composition according to the present invention was formulated to test the sprayability. The individual components are mixed and homogenized with the aid of a dissolver. The amounts of the components used are stated in wt.-%, based on the total weight of the composition (Table 1). The resulting composition exhibited a dynamic viscosity of 164 mPa s at a shear rate of 100 000 sec.⁻¹, measured with capillary rheometer, die 0.5 mm diameter, 8 mm length, 23°C.

**Table 1: Inventive composition**

| **Component** | **Name** | **Function** | **Wt.%** |
|---|---|---|---|
| Geniosil® STP-E 10 | Dimethoxy(methyl)silylmethyl carbamate-terminated polyether | Low viscosity silyl-terminated polyether polymer | 5.6 |
| Geniosil® STP-E 30 | Dimethoxy(methyl)silylmethyl carbamate-terminated polyether | High viscosity silyl-terminated polyether polymer | 2.4 |
| Plastomoll® DNA | Diisononyl adipate | Plasticiser | 57 |
| | Ethyl acetate | Polar aprotic solvent | 10 |
| Geniosil® XL 10 | Trimethoxyvinylsilane | Water scavenger | 2 |
| Geniosil® GF 96 | 3-Aminopropyltrimethoxysilane | Catalyst | 2 |
| Cab-O-Sil® TS 720 | Fumed silica | Thixotropic additive | 6 |
| Omyacarb® 5 -SV | Chalk | Filler | 15 |

This composition is then sprayed by employing an airless spray technique using an airless spray machine type Spraytech EP 2510 (formerly SprayTECH Corporation, now Titan Tool Inc.) having a spray nozzle type 425 by applying a pressure of 80 bar at room temperature.The technical specifications of the Spraytec EP 2510 are as follows: pisten pump system for fluid transport, maximum pump pressure 200 bar, maximum output 4.7 I/min.

The composition is sprayed onto a cardboard paper with the spray gun at a distance between approximately 30 and 50 cm, thereby moving the spray gun slowly over the surface either in vertical or horizontal direction. The width of the spray image is then determined by a meter scale. The test was repeated twice.

The sprayability was rated additionally according to the following criteria (Table 2), whereby an acceptable sprayability for firestop coatings must have at least rank 4.

**Table 2: Spray characteristic - ranking**

| **Rank** | **Spray characteristic** |
|---|---|
| 1 | One beam, no spray / spray mist generated, spray angle being extremely small; i.e. spray angle almost 0° |
| 2 | 2-3 single beams, however no spray /spray mist generated |
| 3 | Started to tear in the center of the spray /spray mist, several thick beams |
| 4 | No uniform and homogeneous distribution, especially in the edge area and in the middle more material is transported, guide beams at the edge area are visible, mist is not homogeneously formed, no complete uniform material film |
| 5 | Perfect spray / spray mist, the material film produced is homogenous, there are no accumulations of material and no guide beams visible |

The inventive composition optically demonstrated a perfect spray mist and a homogeneous material film. Thus, the spray ranking was rated to be 5. Hence, the composition of the present invention can be applied easily by means of an airless spray gun at low pressures such as pressures below 100 bar. This offers the advantage of fast and easy applicability. Further, the compositions of the present invention exhibit an improved weathering resistance compared to the prior art compositions.

## Claims

1. A composition comprising
a first low viscosity polyether-based silane-terminated polymer,
a second low viscosity polyether-based silane-terminated polymer,
a plasticizer, and
a polar aprotic solvent.

2. The composition according to claim 1, wherein the first low viscosity polyether-based silane-terminated polymer and/or the second low viscosity polyether-based silane-terminated polymer is a trimethoxysilylpropylcarbamate-terminated polyether or a dimethoxy(methyl)silylmethylcarbamate-terminated polyether.

3. The composition according to claim 1 or 2, wherein the first and the second low viscosity polyether-based silane-terminated polymer is a dimethoxy(methyl)silyl-methylcarbamate-terminated polyether.

4. The composition according to according to any one of the preceding claims, wherein the first low viscosity polyether-based silane-terminated polymer has a dynamic viscosity in the range of from about 5,000 to about 15,000 mPa s as measured at 25°C according to DIN 51562.

5. The composition according to any one of the preceding claims, wherein the second low viscosity polyether-based silane-terminated polymer has a dynamic viscosity in the range of from about 20,000 to about 40,000 mPa s as measured at 25°C according to DIN 51562.

6. The composition according to any one of the preceding claims, wherein the plasticizer is a phthalate, an adipate or a phosphate, preferably is diisononyl adipate, diisononyl phthalate or isodecyl diphenylphosphate.

7. The composition according to any one of the preceding claims, wherein the polar aprotic solvent is selected from the group consisting of dimethyl sulfoxide, ethyl acetate, dimethyl formamide, acetonitrile, acetone, methyl ethyl ketone, 1,4-dioxane and tetrahydrofuran, preferably is ethyl acetate.

8. The composition according to any one of the preceding claims, further comprising a thixotropic additive, preferably fumed silica.

9. The composition according to any one of the preceding claims, further comprising a catalyst, preferably 3-aminopropyltrimethoxysilane.

10. The composition according to any one of the preceding claims, further comprising a water scavenger, preferably trimethoxyvinylsilane.

11. Use of the composition according to any one of claims 1 to 10 as a coating, preferably as a sprayable coating.

12. An airless-sprayable firestop coating comprising the composition according to any one of claims 1 to 10.

13. The airless-sprayable firestop coating of claim 12, for improving firestop in a gap or joint between at least two building structures.

14. The airless-sprayable firestop coating of claim 13, wherein the at least two building structures are structures of a top of wall, wall to wall, floor to wall, floor to floor and edge of slab constructions, such as curtain wall constructions.

15. Use of the airless-sprayable firestop coating according to any one of claims 12 to 14 for enhancing firestopping in a gap or joint between at least two building structures, preferably structures of a top of wall, wall to wall, floor to wall, floor to floor and edge of slab constructions, such as curtain wall constructions.
